# EUROPÄISCHE PATENTSCHRIFT

(11) **EP 1 872 974 B1**
(45) Veröffentlichungstag und Bekanntmachung des Hinweises auf die Patenterteilung: **23.03.2011**
(21) Anmeldenummer: 07107594.9
(22) Anmeldetag: 07.05.2007
(51) Int. Cl.: B60C 11/11, B60C 11/13

(54) **Fahrzeugreifen mit einem profilierten Laufstreifen**
Vehicle tyre with a profiled tread
Pneu doté d'une bande de roulement profilée

(30) Priorität: 01.07.2006 DE 102006030390
(43) Veröffentlichungstag der Anmeldung: 02.01.2008
(73) Patentinhaber: Continental Reifen Deutschland GmbH, 30165 Hannover (DE)
(72) Erfinder: Schulze, Thomas, 30171 Hannover (DE); Fischer, Markus, 30823 Garbsen (DE)
(74) Vertreter: Finger, Karsten

(56) Entgegenhaltungen:
- EP-A- 0 681 930
- EP-A- 1 074 405
- JP-A- 3 132 403
- JP-A- 3 273 905
- JP-A- 2004 203 324
- JP-A- 2005 231 600

## Beschreibung

Die Erfindung betrifft einen Fahrzeugreifen mit einem profilierten Laufstreifen, welcher durch Profilrillen, welche jeweils mindestens eine Rillenwand aufweisen, die sich aus dem Rillengrund nach radial außen erstreckt, in nach radial außen weisende, die mantelförmige Bodenkontaktfläche bildende Profilpositive unterteilt ist, wobei zumindest ein in etwa kantenparalleler Endbereich eines Profilpositiven zu der diesen Profilpositiven begrenzenden Profilrille als eine aus der Bodenkontaktfläche nach radial innen abknickende Profilkantenfläche ausgebildet ist, welche nach radial innen mit der angrenzenden Profilrillenwand fluchtet und einen radial äußeren Erstreckungsbereich der Rillenwand bildet, wobei jeweils in der Schnittebene senkrecht zur Rillenlängserstreckungsrichtung der Profilrille der zwischen Rillenwand und radialer Richtung eingeschlossene Winkel im radial äußeren Erstreckungsbereich der Rillenwand größer als im radial inneren Erstreckungsbereich ist.

Ein solcher Fahrzeugreifen ist aus der EP 0 681 930 bereits bekannt.

Ein Fahrzeugreifen mit einem derartigen Laufstreifenprofil ist aus der EP 1074 405 A1 bekannt geworden. Die Profilausbildung mit angefasten, nach radial innen aus der Bodenaufstandsfläche in Richtung Profilrille abknickenden Profilkantenbereichen quer zur Laufrichtung dient dazu, das Einrollen der Profilkanten im Ein- und Auslauf des Reifens im Latsch zu reduzieren, um so eine möglichst große Bodenkontaktfläche, insbesondere während des Abbremsens und des Antreibens, bereit zu stellen. Beim Fahren bewirken dynamische Kräfte, die senkrecht zur Rillenwand gerichtet sind, bei einem Profilpositiv ohne angefaste Profilkanten ein Einrollen der zwischen Rillenwand und radial nach außen begrenzenden Mantelfläche gebildeten Kante und eine hierdurch unerwünschte Deformation des erhabenen Profilelements mit der Folge undefinierter, reduzierter Krafteinleitung zwischen Straßenoberfläche und erhabenem Profilpositiv. Die Anfasungen der Profilkantenbereiche der EP 1 074 405 Al sind insbesondere derart konturiert, dass der Bodenkontaktdruck des Profilpositiven vereinheitlicht ist. Jedoch ist vollständig auf Griffkanten verzichtet, so dass der Griff auf der Fahrbahnoberfläche reduziert ist.

Daher besteht in Bezug auf die Traktion weiterhin Bedarf an Verbesserung.

Es ist die Aufgabe der vorliegenden Erfindung einen Fahrzeugreifen mit einem Laufflächenprofil bereitzustellen, durch den die Schnee-, Nass- und Trockentraktion gegenüber bekannten Reifen verbessert ist.

Die Aufgabe wird auf überraschend Art und Weise dadurch gelöst, dass zumindest einige dieser abknickenden Profilkantenflächen eine größere Oberflächenrauhigkeit aufweisen, als die Rauhigkeit der Oberfläche der mantelförmigen Bodenkontaktfläche.

Indem die angefasten, aus der Bodenaufstandsfläche nach radial innen abknickenden Profilkantenflächen eine größere Rauhigkeit aufweisen als die in etwa horizontal ausgebildete Bodenaufstandsfläche, ist die Traktion verbessert. Der Vorteil der Bereitstellung einer großen Bodenkontaktfläche durch eine geminderte Verformung der Profilpositiven im Ein- und im Auslauf bleibt erhalten. Durch die mit Rauhigkeit versehenen angefasten Profilkantenbereiche ist einerseits eine bessere Schneetraktion dadurch erreicht, dass durch die Rauhigkeit (Erhebungen und Vertiefungen) die Oberfläche der angefasten Profilkantenbereiche und somit die Kontaktoberfläche für den Schneeeingriff im Ein- und Auslauf des Profilpositivs vergrößert ist, wodurch das Abbrems- und Beschleunigungsverhalten auf Schnee verbessert ist.
Andererseits ist die Nass- und Trockentraktion in Abhängigkeit von der Fahrbahnbeschaffenheit dadurch verbessert, dass die angerauten, auf der Fahrbahnoberfläche aufsetzenden Schrägflächen der Profilpositiven durch ihre Rauhigkeit einen besseren Eingriff in die Fahrbahnoberfläche haben, weil die Fahrbahnoberfläche ebenfalls Rauhigkeiten aufweist und durch die Verzahnung von Profilrauhigkeit und Fahrbahnoberflächenrauhigkeit die Traktion (Nass- und Trockentraktion) verbessert ist.

Gerade Neureifen weisen eine Laufstreifenoberfläche auf, die herstellungsbedingt durch beispielsweise verschiedene Einstriche "glatt" und auch beim Vulkanisieren meist fettig ist. Neureifen haben einen geringeren Reibungswiderstand als bereits eingefahrene Reifen, denn bei Gebrauch des Reifens wird die glatte Außenhaut abgetragen bzw. aufgeraut. Ein Reifen muss ca. 1000 km eingefahren werden, bevor er den optimalen Reibwert bzw. Reifungskoeffizienten erreicht hat und optimal einsatzfähig ist. Um auch einen Neureifen mit einem verbesserten Haftvermögen auszustatten, ist die Anordnung einer Rauhigkeit auf den angefasten Profilkantenflächen von wesentlichem Vorteil.

Der Begriff "Traktion" meint das Haftvermögen von Reifen am Untergrund und die hierdurch übertragene Kraft des Fahrzeugs. Das Haftvermögen ist insbesondere beim Abbremsen und Antreiben des Fahrzeugs von Interesse. Der Begriff "Profilpositive" meint durch Rillen voneinander getrennte Erhebungen in Form von Profilblöcken und/oder Profilbändern.

Es hat sich gezeigt, dass die Traktion mit einer Rautiefe im Bereich der größeren Oberflächenrauhigkeit zwischen 10 bis 500µm, vorzugsweise zwischen 20 und 200µm wesentlich gegenüber unbehandelten, glatten Profilkantenbereichen verbessert ist. Unbehandelte Laufflächenprofiloberflächen weisen eine mittlere Rautiefe von unterhalb 5 µm auf.

In einer Ausführungsform kann die Profilkantenfläche eine ebene Fläche sein oder die Profilkantenfläche kann eine aus mehrfach unter gleichen oder unterschiedlichen Winkeln abknickende Fläche sein.

In einer anderen Ausführungsform kann die Profilkantenfläche eine einen Radius oder mehrere Radien aufweisende, gebogene Fläche sein.

Kombinationen der vorgenannten Ausführungen der Profilkantenflächenkonturen sind beliebig in ein und demselben Laufstreifenprofil kombinierbar. Jedoch weisen zumindest einige der Profilkantenflächen eine erhöhte Rauhigkeit gegenüber der übrigen Laufstreifenprofiloberfläche auf. Die Rauhigkeit ist auf der gesamten aufgerauhten Profilkantenfläche in etwa einheitlich.

Insbesondere bei Winterreifen ist es vorteilhaft, wenn der Feineinschnitt eine schmale Rille ist und zumindest ein Profilpositivkantenbereich aus der Bodenkontaktfläche nach radial innen in Richtung des Feineinschnitts abknickend ausgebildet ist. Feineinschnitte weisen üblicherweise Breiten von 0,2 - 1,0 mm auf. Es können ebenfalls beide Profilpositivkantenbereiche, welche an ein und den selben Feineinschnitt angrenzen, aus der Bodenkontaktfläche nach radial innen in Richtung des Feineinschnitts mit entgegen gesetztem Neigungsverlauf abknickend ausgebildet sind, so dass sich V-förmige Erweiterungen des Feineinschnittes in Richtung Bodenaufstandsfläche ergeben.
Gerade bei Winterreifen, die zu den bekannten Rillen (Quer-, Längs- oder Diagonalrillen) ebenfalls Feineinschnitte (auch als "Lamellen" bekannt) innerhalb der Profilpositive aufweisen, erweisen sich V-förmige Feineinschnitte, deren V sich in Richtung Bodenaufstandsfläche öffnet und deren V-förmige Flächen mit einer erhöhten Rauhigkeit versehen sind, als vorteilhaft. Durch die angeraute Oberfläche ist die bereitgestellte Kontaktfläche zum Schnee vergrößert. Durch den V-förmigen, in Richtung Bodenaufstandfläche erweiterten Feineinschnitt kann mehr Schnee in den Feineinschnitt eingepresst werden, wodurch die Traktion zusätzlich durch die Schnee/Schnee-Reibung verbessert ist.

Die Profilrillen können längs-, quer- und/oder diagonal verlaufende Rillen sein. In dieser Anmeldung sind ebenfalls "Feineinschnitte" mit unter den Begriff "Rille" gefasst. Eine Profilrille kann durchgängig durch einen Profilpositiven ausgebildet sein, oder als eine Sackrille innerhalb des Profilpositiven enden.

Weitere Merkmale, Vorteile und Einzelheiten der Erfindung werden nun anhand der Zeichnungen, die schematische Ausführungsbeispiele darstellen, näher erläutert. Es zeigen die:
- Fig.1: Aufsicht auf ein Laufstreifenprofil;
- Fig.2: Längsschnitt A-A' durch das Laufstreifenprofil der Fig.1;
- Fig.3: eine vergrößerte Darstellung eines Ausschnitts einer rauen Profilkantenfläche.

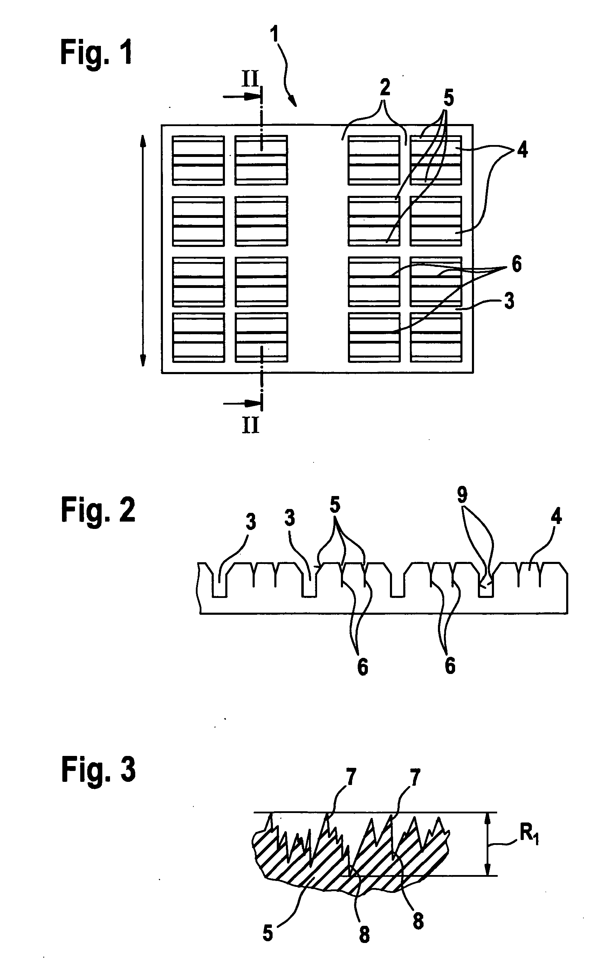

In der **Fig.1** ist eine Aufsicht auf ein schematisches laufrichtungsungebundenes (Drehsinn in Pfeilrichtung) Laufstreifenprofil 1 eines Reifens (nicht gezeigt) dargestellt. Das Laufstreifenprofil 1 ist durch Rillen 2,3 in Profilpositive 4 unterteilt. Die Profilpositiven 4 sind Profilblöcke und ein mittig angeordnetes Profilband. Die Profilpositiven 4 weisen quer zur Laufrichtung des Reifens angefaste, aus der Bodenaufstandsfläche nach radial innen in die Profilrille abknickende Profilkantenflächen 5 auf, die angeraut sind.
Die abknickende Profilkantenflächen 5 fluchten nach radial innen mit der angrenzenden Profilrillenwand und bilden einen radial äußeren Erstreckungsbereich der Rillenwand, wobei jeweils in der Schnittebene senkrecht zur Rillenlängserstreckungsrichtung der Profilrille der zwischen Rillenwand und radialer Richtung eingeschlossene Winkel im radial äußeren Erstreckungsbereich der Rillenwand größer als im radial inneren Erstreckungsbereich ist. Die Rautiefe R_{T} beträgt ca. 50µm und ist auf der gesamten Profilkantenfläche 5 in etwa gleich. Die horizontale Bodenaufstandsfläche weist etwa eine Rautiefe R_{T} von weniger als 5 µm auf. Durch die mit Rauhigkeit versehenen angefasten Profilkantenbereiche 5 ist einerseits eine bessere Schneetraktion dadurch erreicht, dass durch die Rauhigkeit (Erhebungen und Vertiefungen) die Oberfläche der angefasten Profilkantenbereiche und somit die Kontaktoberfläche für den Schneeeingriff vergrößert ist, wodurch das Abbrems- und Beschleunigungsverhalten auf Schnee verbessert ist. Andererseits ist die Nass- und Trockentraktion in Abhängigkeit von der Fahrbahnbeschaffenheit dadurch verbessert, dass die angerauten, auf der Fahrbahnoberfläche aufsetzenden Schrägflächen 5 der Profilpositiven durch ihre Rauhigkeit einen besseren Eingriff in die Fahrbahnoberfläche haben, weil die Fahrbahnoberfläche ebenfalls Rauhigkeiten aufweist und durch die Verzahnung von Profilrauhigkeit und Fahrbahnoberfläche die Traktion (Nass- und Trockentraktion) verbessert ist.

Die **Fig.2** zeigt einen Längsschnitt A-A' durch das Laufstreifenprofil 1 der Fig.1 Die Verwendung der Bezugszeichen entspricht der Verwendung dieser in Fig. 1. Die Feineinschnitte 6 sind innerhalb der Profilpositiven 4 in radialer Erstreckung angeordnet und weisen eine V-förmige Erweiterung auf, wobei sich das V in Richtung Bodenaufstandsfläche öffnet. Die V-förmigen Flächen weisen eine größere Rautiefe R_{T} auf, als die in etwa horizontalen Profilelementaufstandsflächen. Mit der Oberflächenrauhigkeit geht eine Oberflächenvergrößerung dieser rauen Fläche einher, so dass die Kontaktfläche zum Schnee ebenfalls vergrößert ist, was sich auf die Schneetraktion positiv auswirkt. Durch den V-förmigen, in Richtung Bodenaufstandfläche erweiterten Feineinschnitt kann im Betrieb des Reifens
zudem mehr Schnee in den Feineinschnitt eingepresst werden, wodurch die Traktion zusätzlich durch die Schnee/Schnee-Reibung verbessert ist.

Die in etwa radial angeordnete Rillenwand weist keine erhöhte Rauhigkeit auf.

Die **Fig.3** zeigt eine vergrößerte Darstellung eines Rauhigkeitsabschnittes auf einer abknickenden Profilkantenfläche 5. Die Rautiefe R_{T} beträgt z.B. 50µm. In der vergrößerten Querschnittsdarstellung sind die Rauhtiefenspitzen 7 und die Rauhtiefentäler 8 zu erkennen. Die Rauhigkeit verbessert die Schneetraktion des Reifens insbesondere durch eine vergrößerte Oberfläche, die Nass- und Trockentraktion ist wesentlich durch den verzahnten Eingriff der Rauspitzen 7 in die Fahrbahnoberflächenunebenheiten erreicht.

### Bezugszeichenliste

### (Teil der Beschreibung)

- 1: Laufstreifenprofil
- 2: Längsrille
- 3: Querrille
- 4: Profilpositiv
- 5: Angefaster Profilkantenbereich
- 6: Feineinschnitt
- 7: Rauhtiefenspitzen
- 8: Rauhtiefentäler
- 9: Profilrillenwand
- R_{T}: Rauhtiefe

## Patentansprüche

1. Fahrzeugreifen mit einem profilierten Laufstreifen (1), welcher durch Profilrillen (2,3), welche jeweils mindestens eine Rillenwand aufweisen, die sich aus dem Rillengrund nach radial außen erstreckt, in nach radial außen weisende, die mantelförmige Bodenkontaktfläche bildende Profilpositive (4) unterteilt ist, wobei zumindest ein in etwa kantenparalleler Endbereich eines Profilpositiven zu der diesen Profilpositiven begrenzenden Profilrille als eine aus der Bodenkontaktfläche nach radial innen abknickende Profilkantenfläche (5) ausgebildet ist, welche nach radial innen mit der angrenzenden Profilrillenwand (9) fluchtet und einen radial äußeren Erstreckungsbereich der Rillenwand bildet, wobei jeweils in der Schnittebene senkrecht zur Rillenlängserstreckungsrichtung der Profilrille der zwischen Rillenwand und radialer Richtung eingeschlossene Winkel im radial äußeren Erstreckungsbereich der Rillenwand größer als im radial inneren Erstreckungsbereich ist.
**dadurch gekennzeichnet,**
**dass** diese abknickende Profilkantenfläche (5) eine größere Oberflächenrauhigkeit aufweist, als die Oberfläche der mantelförmigen Bodenkontaktfläche.

2. Fahrzeugreifen nach Anspruch 1,
**dadurch gekennzeichnet,**
**dass** die Rautiefe im Bereich der größeren Oberflächenrauhigkeit zwischen 10 bis 500µm, vorzugsweise zwischen 20 und 200µm ist.

3. Fahrzeugreifen nach einem der vorangehenden Ansprüche,
**dadurch gekennzeichnet,**
**dass** die abknickende Profilkantenfläche (5) eine ebene Fläche ist.

4. Fahrzeugreifen nach Anspruch 1,
**dadurch gekennzeichnet,**
**dass** die abknickende Profilkantenfläche (5) aus mehrfach unter gleichen oder unterschiedlichen Winkeln abknickende Fläche ist.

5. Fahrzeugreifen nach einem oder mehreren der vorangehenden Ansprüche,
**dadurch gekennzeichnet,**
**dass** die abknickende Profilkantenfläche (5) eine einen oder mehrere Radien aufweisende, gebogene Fläche ist.

6. Fahrzeugreifen nach einem oder mehreren der vorangehenden Ansprüche,
**dadurch gekennzeichnet,**
**dass** die Rille (2,3) ein Feineinschnitt (6) ist und zumindest ein Profilpositivkantenbereich (5) aus der Bodenkontaktfläche nach radial innen in Richtung der Feineinschnittsrille abknickend ausgebildet ist.

7. Fahrzeugreifen nach Anspruch 6,
**dadurch gekennzeichnet,**
**dass** beide Profilpositivkantenbereiche (5), welche an ein und den selben Feineinschnitt (6) angrenzen, aus der Bodenkontaktfläche nach radial innen in Richtung der Feineinschnittrille mit entgegen gesetztem Neigungsverlauf abknickend ausgebildet sind.

## Claims

1. Vehicle tyre with a profiled tread rubber (1), which is divided by tread grooves (2, 3), which each have at least one groove wall that extends radially outwards from the groove base, into radially outwardly pointing profile positives (4), forming the casing-shaped ground contact surface, at least one approximately edge-parallel end region of a profile positive being formed in relation to the tread groove delimiting this profile positive as a profile edge surface (5) which is angled away radially inwards from the ground contact surface, is flush radially inwards with the adjacent tread groove wall (9) and forms a region of radially outer extent of the groove wall, the angle that is formed between the groove wall and the radial direction respectively in the sectional plane perpendicular to the direction of longitudinal extent of the profile groove being greater in the radially outer region of extent of the groove wall than in the radially inner region of extent, **characterized in that** this angled-away profile edge surface (5) has a greater surface roughness than the surface of the casing-shaped ground contact surface.

2. Vehicle tyre according to Claim 1, **characterized in that** the depth of roughness of the greatest surface roughness is between 10 and 500 µm, preferably between 20 and 200 µm.

3. Vehicle tyre according to either of the preceding claims, **characterized in that** the angled-away profile edge surface (5) is a planar surface.

4. Vehicle tyre according to Claim 1, **characterized in that** the angled-away profile edge surface (5) has a surface angled away multiply at the same or different angles.

5. Vehicle tyre according to one or more of the preceding claims, **characterized in that** the angled-away profile edge surface (5) is a bent surface having one or more radii.

6. Vehicle tyre according to one or more of the preceding claims, **characterized in that** the groove (2, 3) is a sipe (6) and at least one profile positive edge region (5) from the ground contact surface is formed as angled away radially inwards in the direction of the sipe groove.

7. Vehicle tyre according to Claim 6, **characterized in that** the two profile positive edge regions (5) which are adjacent to one and the same sipe (6) from the ground contact surface are formed as angled away radially inwards in the direction of the sipe groove with opposing inclination.

## Revendications

1. Bandage pour roue de véhicule doté d'une bande de roulement profilée (1) divisée par des rainures profilées (2, 3) qui présentent toutes au moins une paroi de rainure qui s'étend radialement vers l'extérieur depuis le fond de la rainure en des profils positifs (4) orientés radialement vers l'extérieur et formant la surface d'enveloppe en contact avec le sol,
au moins une partie d'extrémité, sensiblement parallèle au bord, d'un profil positif, étant configurée en direction de la rainure profilée qui délimite ce profil positif comme surface (5) de bord de profilé qui est coudée radialement vers l'intérieur depuis la surface de contact avec le sol et qui est alignée radialement vers l'intérieur sur la paroi adjacente (9) de rainure profilée en formant une extension radialement extérieure de la paroi de la rainure, un angle formé entre la paroi de la rainure et la direction radiale dans le plan de coupe perpendiculaire à la direction d'extension longitudinale de la rainure profilée étant plus grand dans la partie radialement extérieure de l'extension que dans la partie radialement intérieure de l'extension,
**caractérisé en ce que**
cette surface (5) coudée de bord profilé présente une plus grande rugosité de surface que la surface de la surface d'enveloppe en contact avec le sol.

2. Bandage pour roue de véhicule selon la revendication 1, **caractérisé en ce que** la profondeur de la rugosité dans la surface de plus grande rugosité est comprise entre 10 et 500 µm et de préférence entre 20 et 200 µm.

3. Bandage pour roue de véhicule selon l'une des revendications précédentes, **caractérisé en ce que** la surface coudée (5) du bord profilé est une surface plane.

4. Bandage pour roue de véhicule selon la revendication 1, **caractérisé en ce que** la surface coudée (5) du bord profilé est une surface coudée plusieurs fois sous des angles identiques ou différents.

5. Bandage pour roue de véhicule selon l'une ou plusieurs des revendications précédentes, **caractérisé en ce que** la surface coudée (5) du bord profilé est une surface cintrée qui présente un ou plusieurs rayons.

6. Bandage pour roue de véhicule selon l'une ou plusieurs des revendications précédentes, **caractérisé en ce que** la rainure (2, 3) est une fine entaille (6) et **en ce qu'**au moins une partie (5) de bord du profil positif est coudée radialement vers l'intérieur en direction de la rainure en fine entaille à partir de la surface de contact avec le sol.

7. Bandage pour roue de véhicule selon la revendication 6, **caractérisé en ce que** les deux parties (5) de bord de profil positif qui sont adjacentes à une seule et même fine entaille (6) sont coudées radialement vers l'intérieur en direction de la rainure avec des inclinaisons opposées partant de la surface de contact avec le sol.
